# EUROPEAN PATENT APPLICATION

(11) **EP 2 048 758 A2**
(43) Date of publication of application: **15.04.2009**
(21) Application number: 08002880.6
(22) Date of filing: 15.02.2008
(51) Int. Cl.: H02J 3/00, H02J 4/00

(54) **Power supply apparatus, power management server, power management system, power supply method**

(30) Priority: 12.10.2007 DE 102007048923
(71) Applicant: Hitachi, Ltd., Chiyoda-ku Tokyo 100-8280 (JP)
(72) Inventor: Hohmann, Peter, 20147 Milano (IT); Slocombe, Dave, 20147 Milano (IT)
(74) Representative: Beetz & Partner

(57) **Abstract**

A power supply apparatus (10) comprises a power receiving section (2) allowing the connection to an electrical power source (1), one or more power tapping sections (8) allowing the connection of one or more power drains (9) for receiving power supplied from said power source, tap switching means (15) for connecting or disconnecting the power tapping section from the power receiving section in accordance with a control signal, and control means (11) for controlling operation of the tap switching means.

## Description

The invention relates to a power supply apparatus, a power management server, a power management system nd a power management method according to the preambles of the independent claims.

Power management becomes an increasingly important issue, particularly at end user sites. It is estimated that up to 10 % of electrical power is wasted at end user sites or premises, for example by standby mode, unnecessary lighting, and the like.

For reducing energy consumption by device standby, various approaches are known. For example, in modern PCs, periphery may be plugged for power supply into a socket at the PC rather than into an own socket. Then, with switching off the PC, power supply for the peripheral components is also switched off. Further, extension sockets are known having plural sockets therein, one of them being a master socket. When switching off of the appliance plugged into the master socket is detected, the other sockets are disconnected from the supply side so that the devices plugged into them do no longer receive power. Further, many devices are provided with built-in standby detection. Once standby is detected, under certain further criteria, the operation mode of the device can be changed. For example, screens of PCs or workstations may, by themselves, go to off when, as a standby criterion, no changed input for a certain while has been detected.

The disadvantage of various such known systems is insufficient adaptation to consumer needs and frequently also reduced responsiveness to user commands, partially by leading to unwanted "dead" components leading to lost functionalities, such as a recoreder switched off due to an associated TV being detected off or in standby.

It is object of the invention to provide a power supply apparatus, a power management server, a power management system and a power supply method capable of performing well adapted power management.

This object is accomplished in accordance with the features of the independent claims. Dependent claims are directed on preferred embodiments of the invention.

A power supply apparatus comprises a power receiving section allowing the connection to an electrical power source of two or three or more phases, one or more power tapping sections allowing the connection of one or more power drains or power consuming devices for receiving power, tap switching means for connecting or disconnecting the power tapping section from the power receiving section in accordance with a control signal, and control means for controlling operation of the tap switching means.

The power supply apparatus may be a portable power strip with several sockets and a plug-provided cord for plugging it into a wall outlet. But the power supply apparatus may likewise be one or a row of power sockets built into a room wall. And likewise, the power supply apparatus may also be a central power distribution installation, for example in the basement in association with the fuse box of a private home.

The control means is adapted to monitor one or more criteria and to control switching of the tap switching means in accordance with said monitored criteria. Particularly, the monitoring means may monitor power consumption at one or two or more individual taps and may command switching-off (i. e. disconnection of the taps/sockets from the apparatus-internal supply line) of one or two or more taps in accordance with said monitorings.

The power supply apparatus may have a local operation mode in which itself makes monitorings, and controls power supply in accordance with monitoring results, and possibly in accordance with other data. It may also or instead have a remote control mode in which it receives commands from remote and may also send information towards remote, communication being made through an appropriate interface of the power supply apparatus. In such a remote mode, the apparatus may communicate with a correspondingly adapted power management server which can receive data from the power supply apparatus and can generate and send control and other data to the power supply apparatus.

The power management server may be provided remote from the power supply apparatus and connected thereto through a data net such as the internet. The server may also be provided closer to the power supply apparatus, for example in the same building or area or building level or block. Connectivity may then be rendered by a local net such as LAN, wLAN or the like, or through dedicated lines or through the power net itself carrying appropriately modulation signals on the power AC.

A power management system consists of the above described power supply apparatus in remote mode and the described power management server, the two components being in communication with each other.

According to a power management method, a power supply apparatus may monitor power supply to one or more power taps thereof and may, in accordance thereto, command connecting or disconnecting power taps from the power supply in accordance with the made determinations.

In a remote mode, the power management method includes on the one hand side making certain monitorings and transmitting the obtained data, possibly after some sort of evaluation or compilation, towards remote. In another or additional aspect, control data may be received from remote and switchings of power tappings may be made in accordance with the control data received from remote.

In the following, embodiments of the invention will be described with reference to the attached drawings, in which
- Fig. 1: is a schematic diagram of a power supply apparatus,
- Fig. 2: is a schematic diagram of control means of the power supply apparatus,
- Fig. 3: is an overall power management system,
- Fig. 4: shows a block diagram of the power management server, and
- Fig. 5: shows schematically power management methods.

Generally, in this specification, same reference numerals shall denote same features. Features described in this specification shall be considered combinable with each other even if not expressly said so, as far as technical reasons do not withstand such a combination.

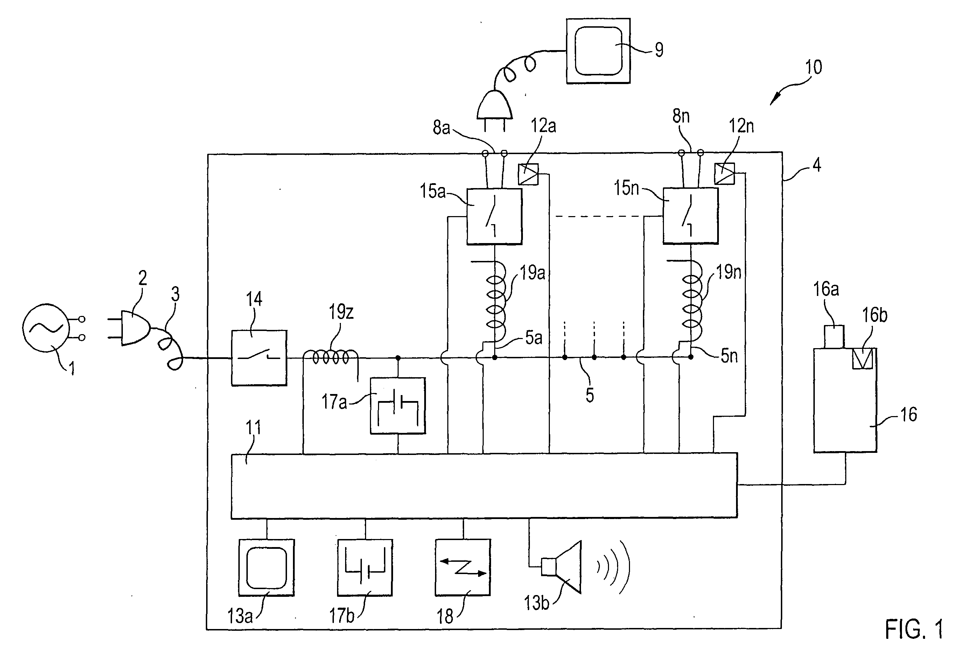

Fig. 1 shows schematically a power supply apparatus 10. It is connectable on its power receiving side to a power source 1, for example through a plug 2 and a cord 3. On the supply side, it is connectable to power drains or power consuming devices 9, for example consumer products such as TV, a recorder, HiFi, computers, or other electric or electronic devices, consumer products, household products and machines or a power forwarding or distribution installation or another power supply apparatus. The apparatus 10 may supply power through tapping sections 8, 8a, ... 8n, which may be sockets for corresponding plugs. The apparatus may be a portable device with a housing 4. It may be a power strip with a cord 3 and a plug 2 for connection to a wall socket, and with plural own sockets 8a, ... 8n. Likewise, the apparatus may be built-in for example as a row of sockets into the wall of a room, or it may be a power distribution installation at a central power inlet of a building or a floor of a building, or the like. 5, 5a, ... 5n denote internal power lines with a central line 5 and branches 5a, ... 5n corresponding to taps 8a, ... 8n. 15 are tap switching means which may each disconnect or reconnect one or more taps 8 from or to the power supply side. They may sit in the lines 5a, ... 5n.

Fig. 1 shows an embodiment where each tap 8 has its own switch 15 (pairs 8a-15a, 8n-15n). But likewise, plural taps may be switched by one switching means 15. Seen in a direction towards taps 8, the switching means 15 may sit behind the power supply 17 of control means 11. Accordingly, when the switching means 15 are off (i.e., disconnection), the power supply 17 still receives power through the power receiving section and can thus supply electrical power to the control means 11.

The control means 11 may receive various inputs. It may receive measures indicating power supplied to one or more taps or received through the receiving section. To this end, for example current sensors 19, 19a, ... 19n may be provided. They may operate inductively, or they may comprise shunts connected into the respective supply line to be detected. Each tap 8a, ... 8n may have its own power sensor 19a, ... 19n. 19z denotes a power sensor at the power input side.

The controller may comprise signal shaping means for appropriately shaping the acquired signal, and probably also converting them into digital data. From the power sensors 19, the controller 11 gains information on power supplied to the apparatus (sensor 19z on the input side), and on power supplied to the respective taps or groups of taps (sensors 19a, ... 19n on the respective taps). Thus, possibly together with one or more suitable thresholds, the controller 11 may distinguish between standby mode (current to device 9 smaller than a first threshold larger than the first threshold) and usual operation (current larger than the second threshold). It may also distinguish between standby and off off-state of a device 9 connected to a tap 8 (current to/from the tap smaller than a second threshold smaller than the first threshold or practically 0). The thresholds may be predefined or may be externally updated from time to time, or may be learned values. Thus, the controller 11 may monitor particularly the power supply status at the various taps individually.

One or plural or all of the taps 8 may be disconnected from power supply (by one or plural or all switches 15 being opened), when standby or 0 current is detected at one or plural or all taps. Particularly, a predetermined plurality of taps 8 (two or more of them) may be switched off when at said plurality of taps standby and/or 0 current is detected. This avoids the unwanted switching off of a certain device due to circumstances at another device.

Switching off may be delayed for a certain period, such as 1 second or more or 10 seconds or more, after finding the related criterion met. During this time lag, the criterion may further be checked, and if found no longer met, switching off is prevented. This avoids tap switch-off and the necessity to a subsequent switch-on due to accidental device standby.

Tap switch-off may further be prevented if some or all connected devices are themselves properly switched off, i. e. consume 0 or less than standby power. Then, switching off their taps/sockets saves nothing, and preventing some kind of tap switch-off avoids the necessity for switching the sockets on again, so that through proper device switch-off comfort is gained. For this, the individual taps may be monitored (for power consumption lower than a threshold below assumed standby consumption), or at the input side of the apparatus 10 the total consumption may be monitored (sensor 19z) and compared with a suitable threshold (such as smallest of all corresponding tap thresholds, own threshold of "acceptable" consumption).

12(a, ... n) symbolizes occupation sensors for sensing whether or not a particular tapping section 8 is occupied by a plug. If yes, the values sensed with respect to such a tap may be taken into account for control, and otherwise the values may be disregarded or may be set irrespective of what is sensed to an appropriate value. It is thus prevented that unoccupied sockets/taps lead to undesired control effects. Further, the control means 11 may generate an alarm (optical by display 13a and/or acoustical by speaker 13b) when a certain plug is removed from or inserted into a socket, for example a removed deep freeze plug or a removed plug of a programmed recorder waiting for something to be recorded. Alarm generation may be programmable for the individual taps 8. This alarm-upon-sensed-plug-operation may constitute an own inventive aspect independent of, but preferably combinable with, one or more of the further features described in this specification.

Switching means 14 may be provided on the input side and particularly between power source 1 and power supply 17a of control means 11. Thus, also the control means 11 can be disconnected from power supply to that the power supply apparatus 10 itself does not consume power. For maintaining basic functionalities of the power supply apparatus 10, however, a (chargeable) battery 17b or other electrical power storage means may be provided which supplies (possibly intermittently) power to control means 11, so that it can maintain certain functionalities even when switch 14 is in off-state.

The apparatus 10 may be provided with activating means 16 for reestablishing connections of the taps 8 and possibly of the power supply side. The activating means 16 may cause switches 14 and 15 to close, i.e. to establish power supply. The activating means 16 may be a separate box connected to the main body 4 of the apparatus 10 through a wire. Thus, irrespective of the arrangement of the apparatus main body 4 (for example somewhere below and behind a desk), the activation means 16 may be located such that it is conveniently reachable for a user or technically reachable for input, such a infrared input. The activation means 16 may comprise a button or switch 16a, or the like to be operated by a user manually. Instead or in addition, the activation means 16 may comprise a signal receiver 16b for receiving signals for example from remote controls of TV, DVD, etc. Receiver 16b may be constructed such that it is responsive to all usual remote control signals (radio signals in a certain frequency range, infrared signals, ultrasonic, ...). With such an activation means 16 it is possible that a user commands reestablishing power supply by closing the switches 14 and 15. More in detail, control means 11 receives certain signals from activation means 16 and generates in response thereto control signals to the respective switches 14, 15.

13a symbolizes display means which may be or comprise indicating spots such as LEDs, or which may comprise a little screen such as a LCD screen. The display 13a may be controlled by control means 11 to display data in relation to saved power consumption, such as money savings due to standby switch-off (i. e. switches 14 or 15 open). Thus control means 11 needs to know saved energy (to be computed as product of standby power and switch-off time) and energy costs (to be inputted). A user may thus get an impression of what the device saves and what it is worth. In addition or instead of this, the display 13 may display various other items, such as momentarily consumed power, price of consumed power, status of various sockets, iconic information, textual or metaphorical information, saving equivalents such as saved CO₂ or saved trees, comparison information in relation to average data or in relation to received data, or the like. The data required for generating appropriate or desired displays may in parts be inputted to the control means 11 from external, particularly by a user or through an interface. 13b symbolizes an alarm generator which may be an acoustical or optical output, voice output or the like.

Generally speaking, an interface 18 may be provided for allowing bidirectional data communication with external components. Data communication may be away from the apparatus 10 or towards the apparatus 10 or both. The interface may be a wireless interface according to a certain standard (for example Zigbee or Bluetooth or wLAN or UWB) or a combination thereof. The interface may, however, also or instead use a wire. It may be or comprise a PLC (Powerline communication) interface. It may use the power cord 3 onto which it may modulate signals through appropriate installations. The interface 18 may generally be used for sending out data or receiving data required for the respective purposes described in this specification. The apparatus may have plural interfaces in parallel. Particularly, it may have an additional interface to an appropriately equipped cell phone, such as a Bluetooth interface. In addition, it may have another (wireless) interface such as Zigbee, wLAN, or the like.

The switching means 15 may be or comprise semiconductor switches for one or all of the phases to be switched, or it may be or comprise an electromechanical device such as a relay.

In its outer appearance, the power supply apparatus 4 may resemble an ordinary power strip in that is has a cord 3 with a plug 2 at its end, a housing 4 and plural sockets 8 in it. However, the additional functionalities as described above may be built-in through appropriate circuitry. The circuitry may be divided into a control part, built separate (particularly on a separate circuit board) from a power part suitable for handling high loads/voltages/powers.

Generally speaking, the power supply apparatus may be adapted for local control as described above. It may also be adapted for remote communication, remote access and remote control, to be described further down this specification. Commands generated under local control by control means 11 may also be received from external and executed in the same way. Likewise, data used for local control may be transmitted to external for appropriate use, storage and evaluation there.

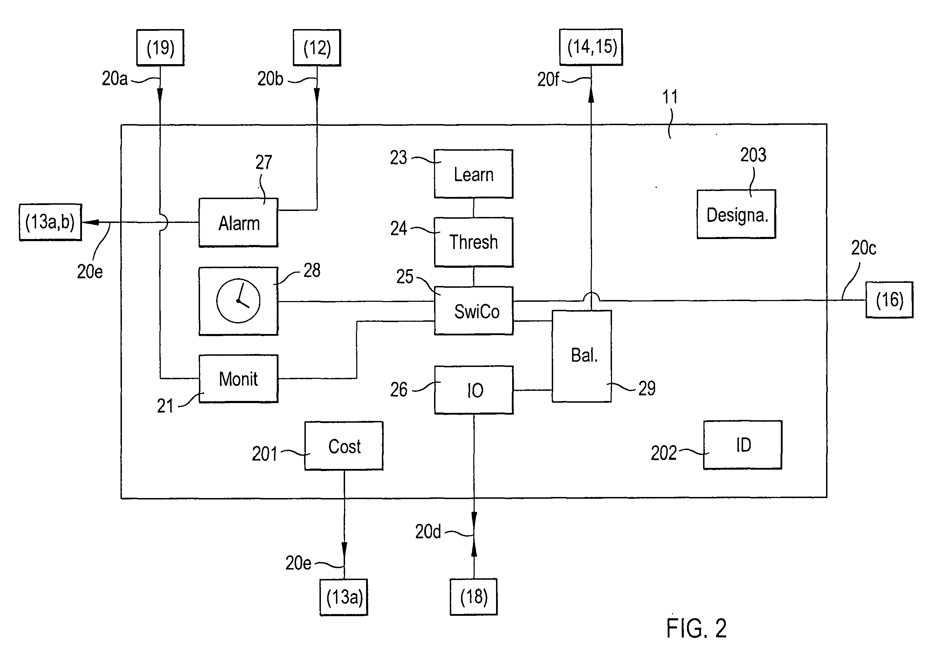

Fig. 2 shows a block diagram of control means 11. The control means may comprise a CPU with RAM, ROM, bus, signal conversion (A/D, D/A), multiplexing, interrupt management, clock, stored tasks, etc.. These hardware components may implement the described functionalities and means of the supply apparatus 10 and control means 11.

The control means has various connections 20 coming in and/or going out. It may have plural incoming lines 20a from power sensors/current sensors 19a...n, z, plural incoming lines 20b from occupation sensors 12, an incoming line 20c from activation means 16, at bidirectional line or bus line 20d to and from interface 18, an outgoing line 20e to display 13a and alarm 13b and plural outgoing lines 20f to switches 14, 15.

25 designates switch control means for generating switch control signals for switching switches 14 and 15 of Fig. 1 to on or off. The switch control section may receive in parallel or in a multiplexed, time-series manner, individual signals of the various taps, supplied from respective sensors 19 and monitored in power monitoring means 21. The monitoring means may make certain processing to the incoming signals from sensors 19 through lines 20a, may store data or may prepare data for sending them out for interface 18. The switch control section 25 may also receive threshold values from a threshold providing section 24 which has predetermined thresholds or communicated thresholds or learned thresholds. Learned thresholds may be supplied from a learning section 23 which evaluates current/power values of the individual taps for finding distinguishing thresholds between standby and on, and possibly between off and standby. The learning means may also be manually operable for giving certain information to the control means 11. The switching control section 25 compares actual power/current values with respective threshold values and generates control signals for switches 14, 15 in accordance with the comparison.

A clock 28 may be provided, an output of which may also be taken into account by the switch control section. For example, taps may be disconnected only after a standby at such a tap is detected for a certain while, such as several minutes. Thus, state of power consumption at the various taps may periodically be polled. For controlling reconnection and reestablishment of power supply, the switch control section 25 may also receive the input line 20c from activation means 16.

An interface input section 26 may generally be provided for exchanging data with interface 18. To some extent, such data may be qualitatively the same as those generated internally by the above described structures. So, different command sources for same commands exist namely the internal switch control section 25 and the interface input section 26. In order to establish clear situations, a command balancing section 29 may be provided receiving from both command sources commands, balancing them against each other according to predefined criteria and finally outputting final commands to output line 20f. Display 13a and other components may receive similarly balanced signals.

Although for inputs and outputs respectively only one line is shown (for example only one line 20a from sensors 19 and one line 20b from sensors 12), respectively plural of them will usually be provided, namely one for each sensor, one for each switching means, and the like. Not shown multiplexing means and A/D or D/A converters may be provided for appropriately handling the respective signals for the respective taps and switches.

Generally speaking, the control means 21 may have identification means 202 for rendering identification information and appropriately allocating, merging and separating data streams, particularly for the respective individual taps and switches. The identifications 202 may, for example, attach to each data received from respective sensors an identifier unique within the apparatus. It may also comprise a time stamp. The identifier may also be rendered indirectly in the form of particular storage locations or other arrangements suitable for allowing discrimination of the respective data. The identification means 202 may also have an identification part that distinguishes the data received by or obtained from one of said apparatuses 10 from all possible other apparatuses. In parts, such identification information may be assigned from external and may be memorized in the identification means 202. The identification means 202 may control multiplexing and may, in accordance with multiplexing, give identification information to data, data streams, and the like. The identification means 202 may also control data transmittal to external by attaching identification information to data packets, or the like. Through the identification means, it becomes possible to distinguish various data within the apparatus and preferably across plural apparatuses also after their acquisition so that an individualized control for each of the taps becomes possible.

27 denotes an alarm generator. It may receive the various signals from the various occupations sensors 12 through lines 20b and may, if necessary, generate an alarm signal, to be supplied to the alarm means 13b through line 20e.

22 denotes a time characteristics acquisition means. This acquisition means may acquire, for a certain tap, a time pattern of power consumption. Of particular interest here may be the switch-on characteristics, i.e. power over time for example for the first five seconds after switching on. Accordingly, power/current is sampled frequently (for example every 100 ms for 5s), the sampled values being digitized and stored. One thus has a representation of a power curve upon switch-on, which may be used, similar to a finger print or DNA, for identifying a device plugged into a certain tap by comparing the acquired pattern or data derived therefrom with stored patterns or corresponding derived data. The acquired time characteristics may be supplied to external for evaluation there. But likewise, it may be evaluated internally. The time characteristics may be processed for extracting data, and such data or the characteristics itself may be checked for being recognized as one particular characteristic or belonging to a certain class of characteristics. Once a device attached to a certain tap is identified, corresponding threshold values for threshold section 24 may be obtained in accordance with said determination. An aging determination may be made by comparing characteristics obtained at different times. An acquired characteristics may be deleted or stored or inactivated when de-plugging a device 9 from a corresponding tap 8 is detected.

201 denotes a cost calculator for calculating costs or savings either in money or in electrical power or for calculating consumption, and displaying it. It may receive quantities such as price of electric power, and it also may receive input from clock 28 and switch control section 25.

203 denotes an assignment means for assigning certain taps and/or their measurement signals (for sensors 12, 19) or control signals to control strategies, or to exempt them therefrom. For example, a user may decide that in a power strip of ten sockets the first two of them shall behave just like very usual sockets, i.e. not being switched irrespective of power consumption or any detections at said taps/sockets. The assignments means 203 may cause such settings, may memorize them, transmit them to external or receive them from external for implementing them in the control means 11. The assignment means may also control assignment of functionalities to certain taps, such as the alarm function, display functions, or the like.

Several of the functions described with reference to Figs. 1 and 2 may be implemented through software running in a more or less complex processor. The entire circuitry may be an ASIC or a processor with components such as ROM, RAM, CPU, BUS, writable but non-volatile memory, and the like. Many or all of the functions may be implemented on the digital side, and sensor signals going into or control signals coming out of control means 11 may go through respective A/D converters or D/A converters. The various functions may be implemented by various tasks periodically triggered, or triggered under certain conditions such as input, findings in other tasks, or the like.

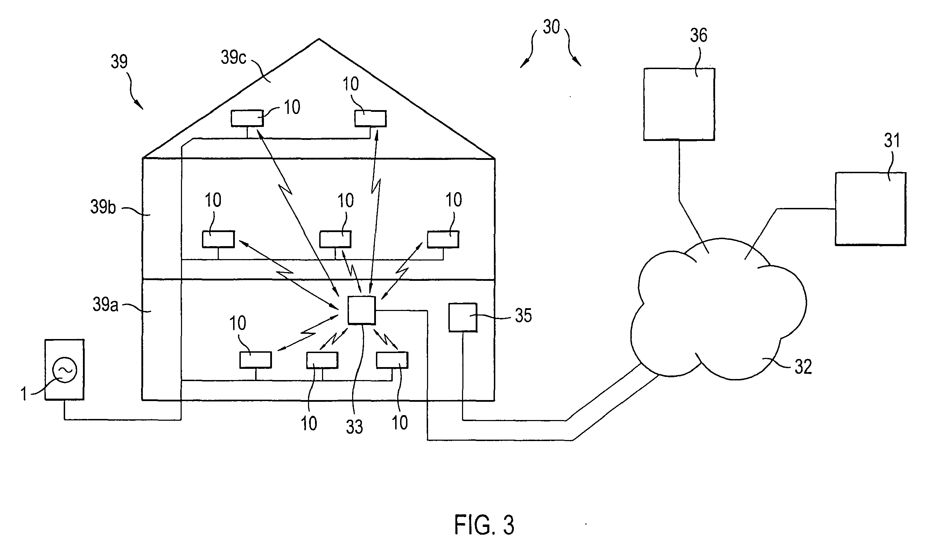

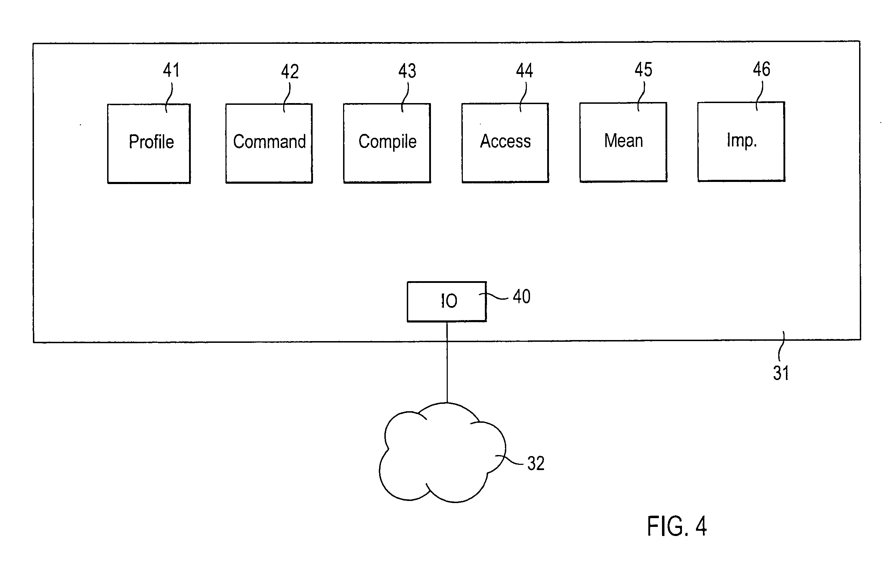

Fig. 3 shows an overall power management system 30. In a certain site, for example a house 39 having floors 39a, 39b, 39c, one or more power supply apparatuses 10 as described above may be installed. They may be built-in or portable or both. They have interfaces 18 for communicating with a local hub 33. The hub may have a gateway function in that it runs a certain protocol towards the power supply apparatuses 10 and runs another protocol towards external. This other protocol may be an internet protocol. Hub 33 is connected to a data communication structure such as a data net or data line. 32 symbolizes a data net, for example the internet. 31 symbolizes a power management server, shown schematically in fig. 4. 36 symbolizes other data sources, accessible through data communication, e. g. through the internet. 35 symbolizes a terminal of someone having relation to the site 39 and/or to power consumption there.

The various power supply apparatuses 10 may, through their respective interface 18, be in communication with hub 33 and exchange data with said hub. Data transmitted from the respective apparatuses 10 to the hub 33 may be status data, switching report data (reporting about switching on or switching off certain taps), characteristics data, alarm data, savings data, settings data, for example reflecting settings rendered by the assignment section 203, identification data, display data, threshold data, learned data, sensor data. Such data may be transmitted towards power management server 31 for storage, processing and evaluation there. As far as necessary, these data are provided with identification information from identification means 202 so that each apparatus 10 and possibly each tap within each apparatus 10 can individually be monitored and addressed.

Server 31 can in response to the received data, generate data and transmit them to hub 33 which in turn may, in accordance with identification information, send them to respectively concerned power supply apparatuses. Data transmitted from the management server to one of the power supply apparatuses 10 may be control data, command data, settings data, threshold data, pricing data, and the like. Server 31 may generate such data in more complex routines and based on broader knowledge than what would be administratable and feasible within a power supply apparatus 10 itself.

The power management server 31 may have in input/output section 40. It may have access to other web servers 36 for getting information therefrom. 35. denotes a user console. It may be at the site of the power storage apparatuses 10. A user may influence the overall system through this console 35, internet 32, management server 31 and back to hub 33 and the power supply apparatuses 10. However, there may also be a direct connection between terminal 35 and hub 33 without taking the way to and from power management server 31.

In a very general sense, server 31 can establish power consumption profiles for the respective apparatuses 10 or for the individual taps 8 therein through profiling means 41. Such profiles may be power level profiles suitable for finding thresholds, or may be time profiles. The profiles may also be kinds of already mentioned finger prints profiles upon switching on suitable for identifying a device based on its switch-on characteristics, such an identification again being suitable, for example, for finding threshold values for switching switches 14 and 15 of the power supply apparatuses 10. Generally speaking, in response to such profiles, commands or other control parameters may be generated in command generating means 42 and may be sent to apparatus 10 from which the profiled data came.

The server 31 may make the same or corresponding determinations as the power supply apparatus 10 and may generate the same or corresponding commands and settings as those described for apparatus 10 or its control means 11, and send them to the power supply apparatus 10. It may thus have the function of control means 11 provided at a remote location.

Further, server 31 and apparatus 10 may be adapted to respectively send and receive data reflecting control algorithms or strategies. The server 31 may send to the apparatus 10, for example, updated thresholds or control algorithms (program data, sub-routine data, task data) for appropriate installation and use there.

The power management server 31 may have information compiling means 43 for compiling the received information from the various power supply apparatuses 10 and make them accessible by access means 44. This may, of course, be subject to user and password input. But the mentioned compilation may involve complex evaluations, a graphical user interface for making settings, and the like. Likewise, through this mechanism, commands can be given through input means 45 directly at the server or through a user terminal 35 or other terminals. As far as such installations employ the internet and management server 31, commands can be given possibly form anywhere, provided that login into the system and for the particular site is possible. Server 31 may be provided with, or have access to, appropriate memories or data bases 45 for reading and writing data.

The data path within site 39 may be more complex than shown in Fig. 3. For example, there may be a terminal for wireless communication with one or more apparatuses 10 on each floor or even in each room, and such terminals may connect wireless or through wires to one central installation rendering connectivity to server 31 and thus taking the function of a hub.

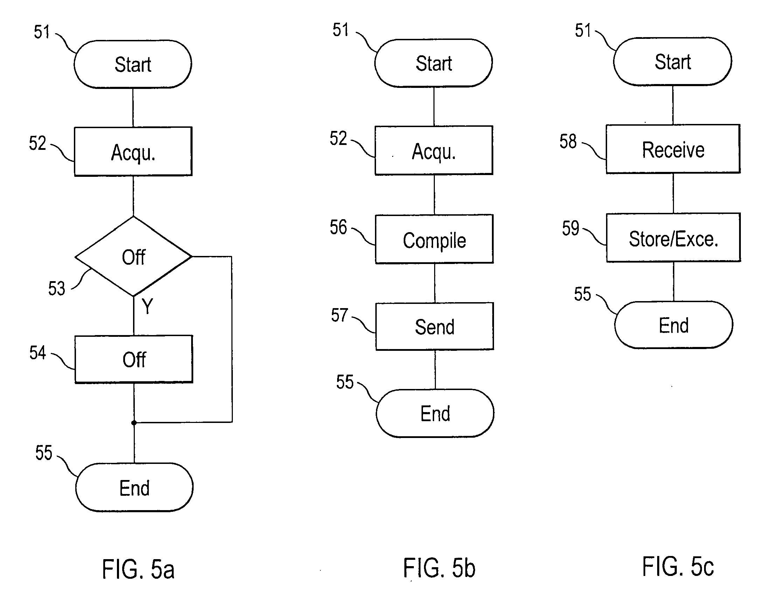

Fig. 5 shows very basic power management methods. Fig. 5a shows a local control method, implemented in apparatus 10. After start 51, in step 52 data are acquired. This may be done within apparatus 10 by control means 11 and acquiring at least power consumption data from sensors 19, and possibly also occupation data from occupation sensors 12. Clock data and ID data from clock 28 and identification means 202 may also be acquired

Then, in step 53, a certain criterion or sets of criteria are checked. Particularly, they may be checked for whether disconnecting a tap 8 from power supply shall be done. If it is found that disconnection shall be made, such disconnection is commanded in step 54. If the criteria for switching off are not met, the procedure ends directly.

In step 53, particular criteria or combined criteria can be checked for. A particular check may be whether plural taps (as far as possibly occupied and as far as assigned for evaluation and not exempted from control by assignment means 203) qualify each individually for disconnection (i.e. showing standby power consumption, possibly for more than a predetermined time). If said plurality of taps show such a behavior and qualify individually for switching off, they may all be switched off, i.e. disconnected from power supply by opening the respective switches 15 through appropriate commands (step 55).

Fig. 5b shows a short flow for remote information, implemented in apparatus 10. In step 52, data are acquired. They may be the same and/or others than those mentioned with respect to fig. 5a. Thereafter, they may be compiled and shaped and formatted for sending in step 56, and in step 57, they may be sent out by apparatus 10 through its interface 18. Thereafter, this flow is terminated (step 55).

Fig. 5c shows a remote control method, implemented in apparatus. In step 58, control data are received from remote. They may be received in interface 18 of apparatus 10 from management server 31 and/or from user terminal 35. In step 48, the data are stored and/or, depending on their nature, executed. They may go through a command balancing section 29 for resolving possible conflicts with internally generated corresponding data.

The described apparatuses, computers, systems and methods allow a fine adapted system for power control. The occurrences of mismatch of the respectively taken measures are lower. Users can make particular settings according to their needs. Thus, the claimed invention allows significant power and money savings while preserving user comfort.

## Claims

1. A power supply apparatus (10) comprising
a power receiving section (2) allowing the connection to an electrical power source (1) of two or more phases,
one or more power tapping sections (8) allowing the connection of one or more power drains (9) for receiving power supplied from said power source,
tap switching means (15) for connecting or disconnecting the power tapping section from the power receiving section in accordance with a control signal, and
control means (11) for controlling operation of the tap switching means.

2. The apparatus of claim 1 wherein the control means (11) comprise power monitoring means for monitoring power supply to a power tapping section and supplying a switch-off signal to the switching means upon detection of a predetermined condition.

3. The apparatus of claim 1 or 2 comprising activating means (16) for supplying a switch-on signal for the switching means.

4. The apparatus of claim 3 wherein the activation means comprises a button (21) and/or a remote control receiver (22) and/or a data input for rendering the switch-on signal, wherein said button and/or said remote control receiver may be provided in an extension module (20) connected to the apparatus main body preferably through a cable (23).

5. The apparatus of one or more of the preceding claims comprising plural power tapping sections (8 a - n) commonly connectable and disconnectable from the power receiving section (2) by said switching means (15).

6. The apparatus of claim 5 and 2 wherein the control means (11) has monitoring means for monitoring power supply to each of the plural power tapping sections and supplying said switch-off signal to the switching means upon detection of plural predetermined conditions in relation to said plural power tapping sections.

7. The apparatus of one or more of the preceding claims comprising time characteristics acquisition means (17) for acquiring the time characteristics of power supplied to one or more power tapping sections, particularly when a rise in power consumption is detected, and for storing data representing the time characteristics.

8. The apparatus of one or more of the preceding claims comprising an interfacing section (18) for rendering data communication with an external device, particularly for sending out acquired data, and/or for receiving control data.

9. The apparatus of one or more of the preceding claims comprising identification means for rendering an ID of the apparatus and/or of the a tapping section thereof, wherein said identification means may comprise ID information receiving means for receiving, from external, and storing an ID assigned to said apparatus and/or tapping section.

10. The apparatus of one or more of the preceding claims wherein the control means comprises current monitoring means for monitoring a current to a tapping section, comparing means for comparing a current representing value with a threshold value, and switching signal generation means for generating a switching signal in accordance with the comparison result.

11. The apparatus of claim 10, wherein the control means comprises threshold obtaining means for obtaining said threshold from a storage and/or from an external input and/or from a learning section.

12. The apparatus of one or more of the preceding claims comprising connection detection means (12) for detecting the connection and/or disconnection of a power tap to a tapping section, and for providing a corresponding connection signal.

13. The apparatus of one or more of the preceding claims wherein the control means comprises characteristics acquisition means for acquiring characteristics values of a load connected to a tapping section.

14. The apparatus of claim 12 and 13 comprising display means 13 adapted for displaying data in relation to saved power consumption, particularly money savings in accordance with the connection signal and the characteristics signal.

15. The apparatus of one or more of the preceding claims wherein the control means comprises alarm generating means for generating an alarm in accordance with the connection signal.

16. The apparatus of one or more of the preceding claims comprising supply switching means 14 for connecting or disconnecting the power receiving section to or from the apparatus components, and an electrical power storage means (17) for storing power for maintaining one or more functionalities of the apparatus while the power receiving section is disconnected.

17. The apparatus of one or more of the preceding claims wherein the control means comprises assignment means for assigning or exempting a tapping section to or from switching its connection to the power receiving section by said switching means.

18. The apparatus of one or more of the preceding claims comprising an interfacing section (18) for rendering data communication with an external computer for receiving command data that could also have been generated within the apparatus, and wherein the control means comprises command balancing means adapted to receiving an internally generated command and an externally received command on the same issue, and issuing a final command in accordance with said received commands.

19. The apparatus of one or more of the preceding claims, comprising one or more of the following features:
a power tapping section (8) is a power socket,
the power receiving section (2) is a power plug, a power drain (9) is an electric or electronic device or a consumer product or a household product
or a power forwarding or distribution installation or another power supply apparatus,
the apparatus is portable and relocatable,
the apparatus is fixedly installable,
the switching means comprises a power semiconductor and/or a relay,
the interface comprises a wireless interface and/or a PLC interface and/or a modulation means for modulating a signal onto a carrier, particularly onto the external voltage appearing at the power receiving section,
the wireless interface comprises a wLAN interface and/or a Bluetooth interface and/or a Zigbee interface and/or an UWB interface.

20. A power management server (31) adapted to having data communication with one or more power supply apparatuses (10) according to one or more of the claims 1 to 19, each of said apparatus comprising an interfacing section (18) for rendering data communication with said server, particularly for sending out data acquired in said power supply apparatus, and for receiving control data and command data, the power management server particularly being adapted for receiving data acquired in said power supply apparatus and for sending control data and command data in accordance with said received data to said power supply apparatus.

21. The server of claim 20 comprising profiling means (51) for establishing a profile of power consumption at one of the apparatuses and/or at a particular tap thereof, and command generating means (52) for generating and sending a command to the apparatus and/or the particular tap thereof in accordance with said profile.

22. The server of claim 20 or 21 comprising information compiling means (53) for compiling information from data received from one or more apparatuses, and information access means for making the compiled information accessible.

23. The server of one of the claims 20 to 22, comprising control input means (56a) for receiving a control input from another source (35), and control output means (56b) for sending a control output to at least one apparatus.

24. A power management system (30) comprising
one or more power supply apparatuses (10) according to one or more of the claims 1 to 19, ,
a power management server (31) according to one or more of the claims 20 - 23, and
a communication path (32 - 34) between the power supply apparatus and the management computer.

25. The system of claim 24 wherein the communication path comprises an internet section (32) between the management computer and a gateway (33), and a local path (34) between the gateway and the power supply apparatus.
